# EUROPEAN PATENT APPLICATION

(11) **EP 4 528 417 A1**
(43) Date of publication of application: **26.03.2025**
(21) Application number: 23807468.6
(22) Date of filing: 08.05.2023
(51) Int. Cl.: G05D 1/02, G01C 21/26, G01C 21/30

(54) **AUTONOMOUS VEHICLE**

(30) Priority: 16.05.2022 JP 2022080003
(71) Applicant: KABUSHIKI KAISHA TOYOTA JIDOSHOKKI, Kariya-shi, Aichi 448-8671 (JP)
(72) Inventor: UNO Takashi, Kariya-shi, Aichi 448-8671 (JP)
(74) Representative: Hoffmann Eitle
(86) International application number: PCT/JP2023/017300
(87) International publication number: WO 2023/223864

(57) **Abstract**

An autonomous vehicle performs a determination process. In the determination process, a controller acquires, from a map generating unit, one of map-image data points as a pre-determination map-image data point, and performs quality determination for a map data set using a result of quality determination for the acquired pre-determination map-image data point and a result of quality determination based on accuracy of estimation of the vehicle's own position made by using the map data set acquired from the map generating unit.

## Description

### TECHNICAL FIELD

The present invention relates to an autonomous vehicle.

### BACKGROUND ART

An autonomous vehicle includes a camera, a storage device, and a controller. The camera captures images of a road surface at specified time intervals. The storage device stores a map data set. The map data set associates position information items with map-image data points.

The controller estimates the position of the autonomous vehicle at specified time intervals. When estimating the vehicle's own position, the controller acquires an image data set from the camera. The controller executes an image matching process to compare the acquired image data points with the map data set stored in the storage device. The controller identifies a map-image data point that corresponds to each image data point through the image matching process. The controller estimates the position of the autonomous vehicle based on the relative positional relationship between the identified map-image data point and the image data point, and the relative angle between the identified map-image data point and the image data point.

For example, as disclosed in Patent Literature 1, a map data set can be acquired, for example, by causing the autonomous vehicle to travel in advance in positions where the autonomous vehicle is expected to travel. The map data set is generated by associating image data points acquired from the camera with position information items and the like corresponding to the image data points.

### CITATION LIST

### Patent Literature

Patent Literature 1: International Publication No. 2019/176083

### SUMMARY OF INVENTION

### Technical Problem

The autonomous vehicle estimates its own position by using the generated map data set. However, when the accuracy of the generated map data set is relatively low, the estimation accuracy of the vehicle's own position decreases. It is thus necessary to determine the quality of the generated map data set. In the quality determination, the autonomous vehicle is caused to travel in order to determine whether the estimation accuracy of the vehicle's own position is sufficient by using the generated map data set. Therefore, in order for the autonomous vehicle to be operational, it is necessary to cause the autonomous vehicle to travel at least twice after starting the generation of the map data set. Consequently, a significant amount of time is required before the autonomous vehicle is operational.

### Solution to Problem

To achieve the foregoing objective and in accordance with one aspect of the present invention, an autonomous vehicle that travels while estimating a vehicle's own position includes a vehicle body, a camera that is mounted on the vehicle body and captures images of a road surface of a route, a map generating unit that generates a map data set by arranging map-image data points, in which position information items are associated with image data points captured by the camera, according to the position information items, and a determining unit. The determining unit acquires, from the map generating unit, one of the map-image data points as a pre-determination map-image data point. The determining unit also performs quality determination for the map data set using a result of quality determination for the acquired pre-determination map-image data point and a result of quality determination based on accuracy of estimation of the vehicle's own position made by using the map data set acquired from the map generating unit.

### BRIEF DESCRIPTION OF DRAWINGS

Fig. 1 is a side view of an autonomous vehicle.
Fig. 2 is a block diagram showing the autonomous vehicle.
Fig. 3 is a flowchart showing a map generating process.
Fig. 4 is a diagram showing an example of an image data point.
Fig. 5 is a diagram showing an example of a map data set.
Fig. 6 is a flowchart showing an own position estimating process.
Fig. 7 is a flowchart showing a determination process.
Fig. 8 is a flowchart showing the determination process.
Fig. 9 is a diagram showing position information items when the reliability of a third position information item is greater than or equal to a threshold.
Fig. 10 is a diagram showing position information items when the reliability of the third position information item is less than the threshold.

### DESCRIPTION OF EMBODIMENTS

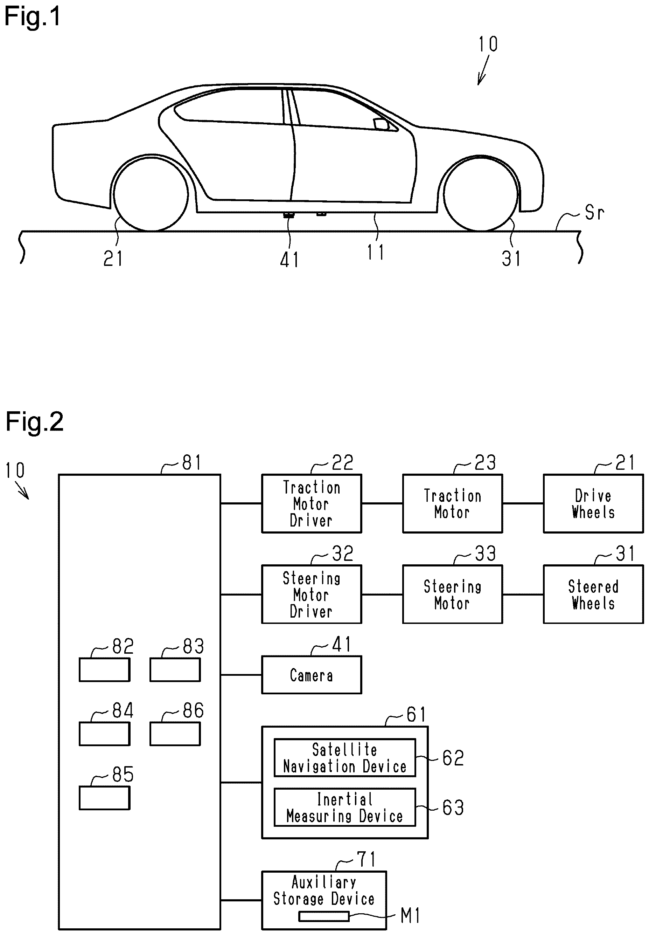

An autonomous vehicle according to one embodiment will now be described with reference to Figs. 1 to 10. In the following description, directional terms such as front, rear, left, and right are defined with reference to the autonomous vehicle. The front-rear direction agrees with the traveling direction of the autonomous vehicle. The left-right direction agrees with the vehicle width direction of the autonomous vehicle.

### Configuration of Autonomous Vehicle

As illustrated in Figs. 1 and 2, an autonomous vehicle 10 includes a vehicle body 11, drive wheels 21, steered wheels 31, a traction motor driver 22, a traction motor 23, a steering motor driver 32, a steering motor 33, a camera 41, a positioning device 61, an auxiliary storage device 71, and a controller 81. The autonomous vehicle 10 may be an automobile or an industrial vehicle. An industrial vehicle includes a forklift, a towing tractor, and an automated guided vehicle. The autonomous vehicle 10 travels while estimating its own position.

The traction motor 23 is a motor that rotates the drive wheels 21. The traction motor driver 22 drives the traction motor 23 in accordance with an instruction from the controller 81. The autonomous vehicle 10 travels by rotating the drive wheels 21 by the driving of the traction motor 23. The steering motor 33 is a motor that steers the steered wheels 31. The steering motor driver 32 drives the steering motor 33 in accordance with an instruction from the controller 81. When the steered wheels 31 are steered by driving the steering motor 33, the autonomous vehicle 10 turns.

The camera 41 is mounted on the vehicle body 11. The camera 41 is a digital camera. The camera 41 includes an image sensor. The image sensor may be, for example, a charge coupled device (CCD) image sensor or a complementary metal oxide semiconductor (CMOS) image sensor. The camera 41 may be, for example, an RGB camera, an infrared camera, a grayscale camera, or a visible light camera.

The camera 41 captures images at a specified frame rate to generate image data points. The image data points are digital data points of images captured by the camera 41.

The camera 41 captures images of a road surface Sr of a predetermined route. The camera 41 generates image data points that represent images of the road surface Sr. The camera 41 is provided on the bottom of the vehicle body 11 in a state of facing in the vertical direction. Specifically, the camera 41 is provided such that the optical axis of the camera 41 agrees with the vertical direction. The state in which the camera 41 faces in the vertical direction allows errors due to the mounting accuracy of the camera 41. Therefore, the camera 41 may be attached to the vehicle body 11 in a state of being oriented in a direction that slightly differs from the vertical direction.

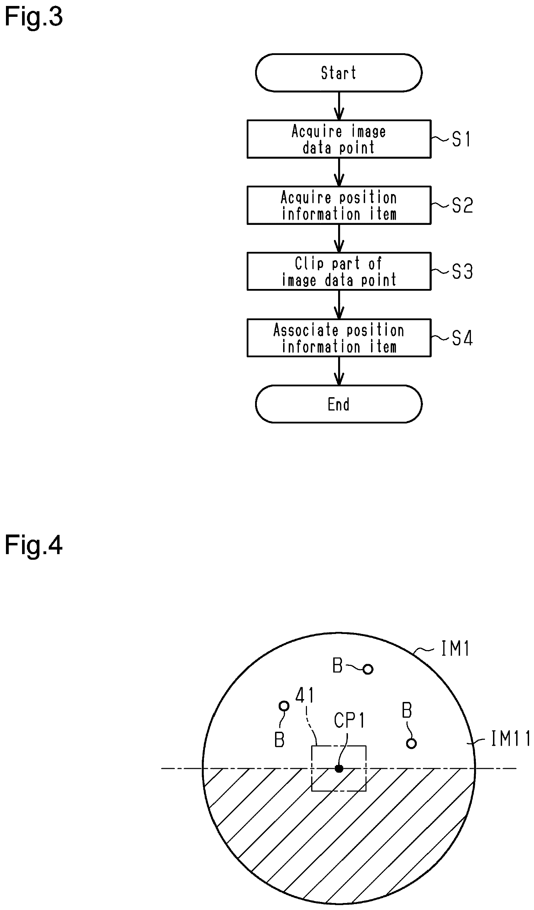

As shown in Fig. 4, an image data point IM1 generated by the camera 41 captures a circular range. The image data point IM1 may also include only a portion of the circular range. For example, the image data point IM1 may capture a semicircular range. In the present embodiment, the image data point IM1 is semicircular. The image data point IM1 contains characteristic portions B on the road surface Sr. The characteristic portions B on the road surface Sr refer to, for example, fine irregularities present on the road surface Sr.

As shown in Fig. 2, the positioning device 61 includes a satellite navigation device 62 and an inertial measuring device 63. The satellite navigation device 62 measures positions using satellite signals transmitted from satellites of a global navigation satellite system (GNSS). The inertial measuring device 63 includes a gyroscope sensor and an acceleration sensor.

The controller 81 includes a processor 82 and a storage unit 83. The processor 82 may be, for example, a central processing unit (CPU), a graphics processing unit (GPU), or a digital signal processor (DSP). The storage unit 83 includes a random access memory (RAM) and a read-only memory (ROM). The storage unit 83 stores program codes or instructions configured to cause the processor 82 to execute processes. The storage unit 83, or a computer-readable medium, includes any type of medium that is accessible by general-purpose computers or dedicated computers. The controller 81 may include a hardware circuit such as an application specific integrated circuit (ASIC) and a field programmable gate array (FPGA). The controller 81, which is processing circuitry, may include one or more processors that operate according to a computer program, one or more hardware circuits such as an ASIC and an FPGA, or a combination thereof.

The controller 81 includes a map generating unit 84, a determining unit 85, and an own position estimating unit 86. The map generating unit 84, the determining unit 85, and the own position estimating unit 86 are functional elements that function when the controller 81 executes predetermined programs.

The auxiliary storage device 71 stores information that can be read by the controller 81. The auxiliary storage device 71 may be a hard disk drive, a solid-state drive, or a flash memory, for example.

The auxiliary storage device 71 stores a map data set M1. The map data set M1 includes map-image data points, in which position information items are associated with image data points corresponding to images of the road surface Sr captured in advance. The map-image data points are arranged according to the position information items. Each position information item includes a coordinate information item and an orientation information item. The coordinate information item refers to a coordinate point in a map coordinate system, which is a coordinate system representing absolute positions. The map coordinate system may be a Cartesian coordinate system or a geographical coordinate system. The orientation information item is an information item indicating an inclination with respect to a coordinate axis of the geographical coordinate system.

The map data set M1 is generated by the map generating unit 84. The map data set M1 can be generated, for example, by causing the autonomous vehicle 10 to travel along an expected route where the autonomous vehicle 10 is expected to travel, or by moving the autonomous vehicle 10 manually. The following describes the map generating process. The map generating process refers to a process performed by the controller 81 at a specified interval to repeatedly execute certain tasks in order to generate the map data set M1.

As will be discussed below, the controller 81 performs a determination process in parallel with the map generating process. This determination process determines the quality of the map data set M1 generated by the map generating process.

### Map Generating Process

As shown in Fig. 3, the controller 81 acquires image data points from the camera 41 in step S1. As an example, a case will be described in which an image data point IM1 shown in Fig. 4 is acquired. As shown in Fig. 4, the image data point IM1 of the present embodiment is a circular image data point. The image data point IM1 contains characteristic portions B on the road surface Sr. Fig. 4 schematically shows characteristic portions B on the road surface Sr.

As shown in Fig. 3, in the subsequent step S2, the controller 81 acquires a position information item. The position information item includes a coordinate information item and an orientation information item. The position information item can be acquired using the positioning device 61. The position information item can be calculated from, for example, the longitude and latitude acquired using the satellite navigation device 62 and a movement amount calculated using the inertial measuring device 63.

Next, in step S3, the controller 81 clips part of the image data point IM1. In the present embodiment, half of the image data point IM1 is clipped. In the example shown in Fig. 4, a range excluding the hatched section is clipped from the image data point IM1. The controller 81 uses the clipped image data point as a map-image data point IM11. The map-image data point IM11 is a semicircular image data point.

For example, the controller 81 can clip a range extending in any direction such as a front half, a rear half, a right half, or a left half of the image data point IM1. In the present embodiment, the front half of the image data point IM1 is clipped. The size of the map-image data point IM11, which is clipped from the image data point IM1, and the position of the map-image data point IM11, which is clipped from the image data point IM1, can be set freely.

As shown in Fig. 3, in the subsequent step S4, the controller 81 associates the position information item obtained in step S2 with the map-image data point IM11. Specifically, the controller 81 associates the position information item, which was acquired at the same time point as the image data point IM1 during step S1, with the map-image data point IM11. As shown in Fig. 4, the controller 81 associates the position information item with a coordinate point CP1 representing the optical axis position of the camera 41 in a coordinate system that represents the pixel position of the map-image data point IM11. The coordinate system indicating pixel position of the map-image data point IM11 is an image coordinate system. The image coordinate system is a two-dimensional orthogonal coordinate system that represents the pixel position of the image data point IM1. The pixel position of the image data point IM1 can be expressed by a coordinate indicating the transverse position of the pixel and a coordinate indicating the longitudinal position of the pixel. The map-image data point IM11 is a data point obtained by clipping part of the image data point IM1. Therefore, the pixel position of the map-image data point IM11 can be expressed by the image coordinate system. The coordinate point CP1, which represents the optical axis position of the camera 41 in the image coordinate system, agrees with the center coordinate point of the image data point IM1 before the map-image data point IM11 is clipped. If the map-image data point IM11 has a semicircular shape, the coordinate point located at the midpoint on the chord is the coordinate point CP1, which represents the optical axis position of the camera 41.

The controller 81 associates pixel scales with the map-image data point IM11. The pixel scale refers to the physical size that a single pixel in a digital image represents in the real world.

The controller 81 associates, with a map-image data point, an image number assigned to each map-image data point. The image numbers are set in order from the map-image data point of the earliest capture time. As an example, an explanation will be provided assuming that Arabic numerals are assigned as image numbers. Among the map-image data points, the map-image data point assigned the smallest image number corresponds to the map-image data point with the earliest capture time. Among the map-image data points, the map-image data point assigned the largest image number corresponds to the map-image data point of the most recent capture time. The controller 81 temporarily stores the map-image data points, which have been provided with position information items and image numbers, in the storage unit 83.

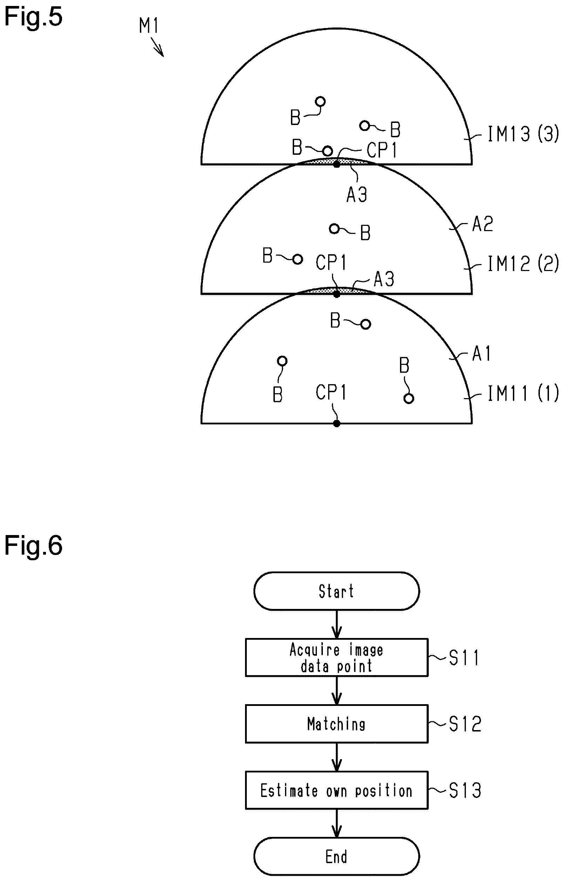

The controller 81 repeatedly performs the processes of steps S1 to S4 at specified intervals to generate multiple map-image data points, and arranges the multiple map-image data points to generate a map data set M1. As an example, a case will be described in which, as shown in Fig. 5, the map data set M1 is generated by three map-image data points IM11 to IM13.

In the map generating process, the interval at which map-image data points are generated is determined such that any consecutive two of the map-image data points include an overlapping range A3 that is larger than or equal to a specified range. The overlapping range A3 is a range of the road surface Sr that is included in both of two consecutive map-image data points. One of the two consecutive map-image data points is referred to as a first map-image data point IM11, and the other is referred to as a second map-image data point IM12. The second map-image data point IM12 is a map-image data point generated one step later than the first map-image data point IM11. The first map-image data point IM11 is an image of a first range A1 of the road surface Sr captured by the camera 41. The second map-image data point IM12 is an image of a second range A2 of the road surface Sr captured by the camera 41. A range in which the first range A1 and the second range A2 overlap each other is an overlapping range A3.

The map data set M1 may be regarded as a data set in which the map-image data points IM11 to IM13 are arranged according to the position information items in the map coordinate system. An image number "1" is assigned to the map-image data point IM11, and an image number "2" is assigned to the map-image data point IM12. An image number "3" is assigned to the map-image data point IM13. The map-image data point IM11 is a map-image data point of the earliest capture time. The map-image data point IM13 is a map-image data point with the most recent capture time. In order to execute the map generating process, the controller 81 includes the map generating unit 84. The controller 81 stores the map data set M1, which has been determined to be non-defective by a determination process discussed below, in the auxiliary storage device 71. On the other hand, the controller 81 discards any map-image data point determined to be defective by the determination process discussed below.

The controller 81 uses the map data set M1 to estimate the position of the autonomous vehicle 10 and control the traction motor driver 22 and the steering motor driver 32. The controller 81 thus moves the autonomous vehicle 10 to a target position. The target position may be set by the user of the autonomous vehicle 10 or may be set by a higher-level controller of the autonomous vehicle 10.

### Own Position Estimating Process

As shown in Fig. 6, the own position estimation is performed by comparing the image data point IM1 with a map-image data point. In step S11, the controller 81 acquires the image data point IM1 from the camera 41. The controller 81 extracts feature points from the image data point IM1. The controller 81 computes the feature quantity of each feature point. The feature quantity may be, for example, a feature quantity vector or a luminance value. In addition, the controller 81 extracts feature points and computes feature quantities by using the map-image data point.

In step S12, the controller 81 performs matching between the feature point and the feature quantity obtained from the image data point IM1 and the feature point and the feature quantity obtained from the map-image data point. The controller 81 searches for a pair of feature points having similar feature quantities. The controller 81 identifies the map-image data point corresponding to the image data point IM1 based on the pair of feature points. For example, the controller 81 identifies a map-image data point in which pairs of the feature points are concentrated as the map-image data point corresponding to the image data point IM1. The matching is performed by using feature amount descriptors. Examples of the feature descriptor include ORB, SIFT, and SURF.

In step S13, the controller 81 estimates the position of the autonomous vehicle 10 based on the map-image data point corresponding to the image data point IM1. The position of the autonomous vehicle 10 includes the coordinate point of the autonomous vehicle 10 in the map coordinate system and the orientation of the autonomous vehicle 10. The controller 81 calculates a relative positional relationship between the image data point IM1 and the map-image data point corresponding to the image data point IM1, and a relative angle between the image data point IM1 and the map-image data point corresponding to the image data point IM1. The relative positional relationship between the image data point IM1 and the map-image data point corresponding to the image data point IM1 is the amount of deviation between the image data point IM1 and the map-image data point. The relative angle between the image data point IM1 and the map-image data point corresponding to the image data point IM1 is a deviation angle between the image data point IM1 and the map-image data point. In many cases, the image data point IM1 captured by the camera 41 does not completely agree with the map-image data point. This is because the position and the orientation of the autonomous vehicle 10 rarely completely agree between the time point when the map-image data point is acquired and the time point when the image data point IM1 is acquired. For this reason, the image data point IM1 often only partially agrees with the map-image data point. For example, when the position of the autonomous vehicle 10 is deviated by half of the image capturing range of the camera 41 between the time point when the map-image data point is acquired and the time point when the image data point IM1 is acquired, half of the image data point IM1 agrees with the map-image data point, and half of the image data point IM1 does not agree with the map-image data point. The amount of deviation is the relative positional relationship between the image data point IM1 and the map-image data point corresponding to the image data point IM1. Similarly, due to the difference in the orientation of the autonomous vehicle 10 between the time point when the map-image data point is acquired and the time point when the image data point IM1 is acquired, the image data point IM1 will appear rotated relative to the map-image data point. A deviation angle caused by this rotation is the relative angle between the image data point IM1 and the map-image data point corresponding to the image data point IM1. The controller 81 estimates the position of the autonomous vehicle 10 based on the position information item, the relative positional relationship, and the relative angle associated with the map-image data point corresponding to the image data point IM1. The controller 81 shifts the map coordinate point associated with the map-image data point corresponding to the image data point IM1 by the coordinates corresponding to the relative positional relationship. Further, the controller 81 shifts the orientation associated with the map-image data point corresponding to the image data point IM1 by the angle corresponding to the relative angle. The controller 81 estimates the coordinate point and the orientation in the map coordinate system acquired by the above-described series of operations as the position of the autonomous vehicle 10. The controller 81 thus includes the own position estimating unit 86.

### Determination Process

The controller 81 performs a determination process in parallel with the map generating process. This determination process determines the quality of the map data set M1 generated by the map generating process. As an example, the controller 81 performs the determination process between the start of the map generating process by the map generating unit 84 and the time the map data set M1 is stored in the auxiliary storage device 71.

First, the controller 81 conducts quality determination for each of the map-image data points forming the map data set M1. Specifically, the controller 81 performs the quality determination by comparing each of the multiple map-image data points, which form the map data set M1, with the corresponding image data points.

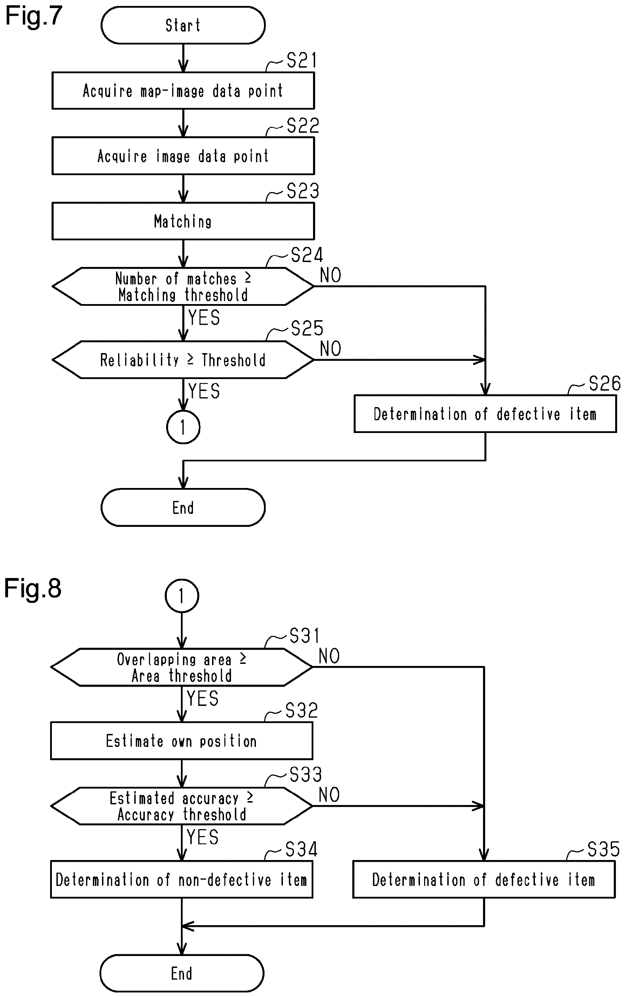

As shown in Fig. 7, the controller 81 acquires a map-image data point from the storage unit 83 in step S21. The map-image data point acquired from the storage unit 83 is a map-image data point that has not been subjected to the determination process by the controller 81 and has the smallest image number. As an example, a case will now be described in which the map-image data point IM11 having the image number "1" is acquired. The controller 81 uses the map-image data point IM11 acquired from the storage unit 83 as a pre-determination map-image data point IMH.

Next, in step S22, the controller 81 acquires an image data point from the camera 41. The controller 81 uses the image data point acquired from the camera 41 as a comparison image data point IMS. The image data point acquired from the camera 41 as the comparison image data point IMS is different from the image data point associated with the position information item of the pre-determination map-image data point IMH, and is an image data point of which the image capturing position and the capture time are closest to those of the pre-determination map-image data point IMH. Specifically, the image data point obtained from the camera 41 as the comparison image data point IMS is the image data point captured one step later than the capture time of the pre-determination map-image data point IMH. This is to ensure that the image capturing conditions for the comparison image data point IMS are as close as possible to those of the pre-determination map-image data point IMH when the determination process is performed. The image data point obtained from the camera 41 as the comparison image data point IMS may be the image data point captured one step earlier than the capture time of the pre-determination map-image data point IMH.

Next, in step S23, the controller 81 performs a matching process between the pre-determination map-image data point IMH and the comparison image data point IMS. Next, in step S24, the controller 81 determines whether the number of matches is greater than or equal to a matching threshold in the matching process in step S23. The matching process can be performed using feature descriptor as in the own position estimating process. This determination is made by comparing feature points extracted from the pre-determination map-image data point IMH with feature points extracted from the comparison image data point IMS (the feature point matching process), and then determining whether the number of matches from which outliers have been removed is greater than or equal to the matching threshold. The outlier removal may be performed using methods such as least median of squares (LMedS) and random sample consensus (RANSAC). When the number of matches is greater than or equal to the matching threshold, the controller 81 determines that the pre-determination map-image data point IMH is a conforming item, and proceeds to step S25. When the number of matches is less than the matching threshold, the controller 81 determines that the pre-determination map-image data point IMH is defective in step S26, and ends the determination process.

When proceeding to step S25, the controller 81 determines the reliability of the position information item associated with the pre-determination map-image data point IMH. The reliability is an index indicating the level of accuracy of the position information item. The greater the reliability, the greater the likelihood that the discrepancy between the position information item and the actual map coordinate point and orientation corresponding to that position information item will be small. The controller 81 determines whether the reliability of the position information item associated with the pre-determination map-image data point IMH is greater than or equal to a threshold. Whether the reliability is greater than or equal to the threshold can be determined based on the position information items acquired multiple times. An example will now be described in which it is determined whether the reliability exceeds the threshold based on consecutively acquired three position information items.

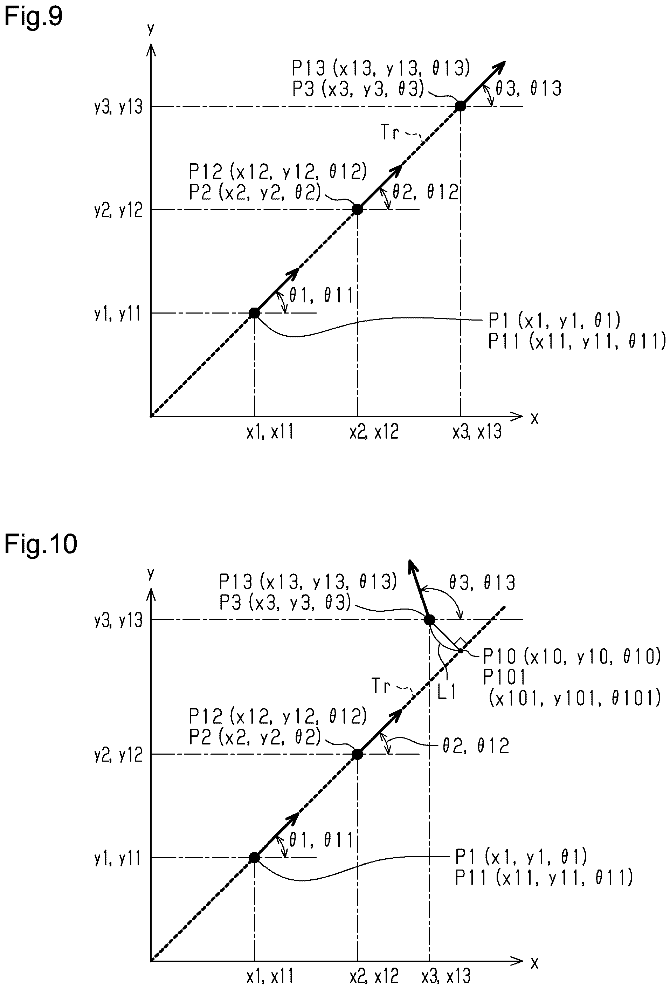

As shown in Fig. 9, the position information items of the three map-image data points are referred to as a first position information item P1 (x1, y1, θ1), a second position information item P2 (x2, y2, θ2), and a third position information item P3 (x3, y3, θ3). The second position information item P2 is a position information item acquired one step earlier than the third position information item P3. The first position information item P1 is acquired two steps earlier than the third position information item P3. The values of x1, x2, and x3 are x-coordinates in the map coordinate system. The values of y1, y2, and y3 are y-coordinates in the map coordinate system. The values θ1, θ2, and θ3 represent orientations. The first position information item P1 includes a first map coordinate point (x1, y1) and a first orientation θ1. The second position information item P2 includes a second map coordinate point (x2, y2) and a second orientation θ2. The third position information item P3 includes a third map coordinate point (x3, y3) and a third orientation θ3.

When the reliability of the position information item is relatively high, the map coordinate point changes linearly. For example, as shown in Fig. 9, the x-coordinate and the y-coordinate have a proportional relationship. Therefore, when a straight line Tr is extracted from the map coordinate points obtained multiple times, the deviation amount of a map coordinate point from the straight line Tr represents the reliability of the map coordinate point.

Fig. 10 illustrates an example in which there is a relatively large deviation between the third position information item P3 and the actual position P10 (x10, y10, θ10) of the pre-determination map-image data point IMH corresponding to the third position information item P3. When there is a relatively large deviation between the third map coordinate point (x3, y3) and a map coordinate point (x10, y10) of the pre-determination map-image data point IMH corresponding to the third map coordinate point (x3, y3), the deviation of the pre-determination map-image data point IMH from the map coordinate point (x10, y10) on the straight line Tr is relatively large. The deviation is a length L1 of a perpendicular line connecting the third map coordinate point (x3, y3) and the straight line Tr. The controller 81 determines whether the length L1 is greater than or equal to a coordinate point threshold. When the length L1 is less than the coordinate point threshold, the reliability of the map coordinate point is greater than or equal to a threshold. The coordinate point threshold is set in accordance with, for example, the interval at which the position information items are acquired.

When the reliability of the position information item is relatively high, the amount of change in orientation is relatively small. Therefore, the difference between the consecutively acquired orientations represents the reliability of the orientation. The difference between consecutively acquired orientations is referred to as an orientation difference. In the example illustrated in Fig. 9, the first orientation θ1, the second orientation θ2, and the third orientation θ3 have the same value.

A case will now be described in which the deviation between the third orientation θ3 and the orientation θ10 of the actual pre-determination map-image data point IMH corresponding to the third orientation θ3 is relatively large. In this case, the orientation difference between the third orientation θ3 and the orientation θ10 of the pre-determination map-image data point IMH is relatively large. The controller 81 determines whether the orientation difference between the third orientation θ3 and the second orientation θ2 is less than an orientation threshold. When the orientation difference is smaller than the orientation threshold, the reliability of the orientation is greater than or equal to the threshold.

The controller 81 may determine that the reliability of the position information item is less than the position information threshold when the reliability of the map coordinate point is less than the coordinate point threshold and the reliability of the orientation is less than the orientation threshold. The controller 81 may determine that the reliability of the position information item is less than the position information threshold when the reliability of the map coordinate point is less than the coordinate point threshold. In this case, the controller 81 does not necessarily need to determine whether the reliability of the orientation is less than the orientation threshold. The controller 81 may determine that the reliability of the position information item is less than the position information threshold when the reliability of the orientation is less than the orientation threshold. In this case, the controller 81 does not necessarily need to determine whether the reliability of the map coordinate point is less than the coordinate point threshold.

When the reliability of the position information item is greater than or equal to the threshold, the controller 81 determines that the pre-determination map-image data point IMH is a conforming item, and proceeds to step S31 as shown in Fig. 8. In contrast, when the reliability of the position information item is less than the threshold, the controller 81 determines that the pre-determination map-image data point IMH is defective in step S26, and ends the determination process.

The controller 81 performs the quality determination for the respective map-image data points that form the map data set M1 by comparing each map-image data point with the corresponding image data point. When the quality determination for all the map-image data points is completed, the controller 81 proceeds to step S31.

The controller 81 conducts the quality determination for the map data set M1 generated by the map generating process.

When proceeding to step S31, the controller 81 calculates the area of each of the overlapping ranges A3 for the multiple map-image data points forming the map data set M1. As shown in Fig. 5, the map-image data points are arranged so as to have overlapping ranges A3. The controller 81 determines whether the calculated overlap area, which is the area of the overlapping range A3, is greater than or equal to an area threshold. The area threshold used in step S31 is determined to be, for example, 50% or more of the effective range of the map-image data point. When all of the overlapping ranges A3 are greater than or equal to the area threshold, the controller 81 determines that the map data set M1 is a conforming item, and proceeds to step S32. In contrast, when there are map-image data points of which the overlapping area is less than the area threshold, the controller 81 determines that the map data set M1 is defective in step S35, and ends the determination process.

The overlapping areas being greater than or equal to the area threshold indicate that the consecutive map-image data points are continuously connected within the required range. If the overlapping areas are less than the area threshold, it indicates that the consecutive map-image data points are displaced from each other more than necessary. When the map-image data points are displaced from each other more than necessary, the continuity between consecutive map-image data points is lost, rendering the map data set M1 defective. Therefore, the overlapping area needs to be greater than or equal to the area threshold.

When proceeding to step S32, the controller 81 performs the own position estimating process using the map data set M1 generated by the map generating process. The own position estimation is performed by comparing an image data point captured by the camera 41 for generating the map data set M1 with the map data set M1 stored in the storage unit 83.

After performing the own position estimation in step S32, the controller 81 proceeds to step S33. When proceeding to step S33, the controller 81 determines the estimation accuracy of the own position estimation. The estimation accuracy is an index indicating the level of accuracy of the own position estimation. The greater the estimation accuracy, the great the reliability of the own position estimation. The controller 81 determines whether the estimation accuracy of the estimated position information item is greater than or equal to an accuracy threshold. Whether the estimation accuracy is greater than or equal to the accuracy threshold can be determined based on position information items estimated multiple times. An example will now be described in which it is determined whether the estimation accuracy exceeds the accuracy threshold based on three consecutively estimated position information items. The determination of whether the estimation accuracy of the position information item is greater than or equal to the accuracy threshold can be performed by the same method as the determination of the reliability of the position information item associated with the pre-determination map-image data point IMH. Therefore, the description will be made with reference to Figs. 9 and 10. The three estimated position information items are referred to as a first estimated position information item P11 (x11, y11, θ11), a second estimated position information item P12 (x12, y12, θ12), and a third estimated position information item P13 (x13, y13, θ13). The second estimated position information item P12 is a position information item acquired one step earlier than the third estimated position information item P13. The first estimated position information item P11 is acquired two steps earlier than the third estimated position information item P13. When the estimation accuracy is relatively high, the map coordinate points change linearly. For example, as shown in Fig. 9, the x-coordinate and the y-coordinate have a proportional relationship. Therefore, when a straight line Tr is extracted from the map coordinate points estimated multiple times, the deviation amount of a map coordinate point from the straight line Tr represents the estimation accuracy of the map coordinate point.

Fig. 10 illustrates an example in which there is a large deviation between the third estimated position information item P13 and the actual own position information item P101 (x101, y101, θ101) that corresponds to the third estimated position information item P13. In this case, the deviation of the vehicle's own position from the map coordinate point (x101, y101) on the straight line Tr is relatively large. The deviation is a length L1 of a perpendicular line connecting the map coordinate point (x13, y13) of the third estimated position and the straight line Tr. The controller 81 determines whether the length L1 is greater than or equal to an estimated coordinate threshold. When the length L1 is less than the estimated coordinate threshold, the estimation accuracy of the map coordinate point is greater than or equal to the accuracy threshold. The estimated coordinate threshold is set in accordance with, for example, the interval at which the position information items are acquired.

When the estimation accuracy of the own position information item is relatively high, the amount of change in orientation is relatively small. Therefore, the difference between the consecutively estimated orientations represents the estimation accuracy of the orientation. The difference between consecutively estimated orientations is referred to as an orientation difference. In the example illustrated in Fig. 9, the first orientation θ11, the second orientation θ12, and the third orientation θ13 have the same value.

A case will now be described in which the deviation between the third orientation θ13 and the orientation θ101 of the vehicle's own position corresponding to the third orientation θ13 is relatively large. In this case, the orientation difference between the third orientation θ13 and the second orientation θ12 is relatively large. The controller 81 determines whether the orientation difference between the third orientation θ13 and the second orientation θ12 is less than an estimated orientation threshold. When the orientation difference is less than the estimated orientation threshold, the estimation accuracy of the orientation is greater than or equal to the accuracy threshold.

The controller 81 may determine that the estimation accuracy is less than the accuracy threshold when the estimation accuracy of the map coordinate point is less than the estimated coordinate threshold and the estimation accuracy of the orientation is less than the estimated orientation threshold. The controller 81 may determine that the estimation accuracy of the position information item is less than the accuracy threshold when the estimation accuracy of the map coordinate point is less than the estimated coordinate threshold. In this case, the controller 81 does not necessarily need to determine whether the estimation accuracy of the orientation is less than the estimated orientation threshold. The controller 81 may determine that the estimation accuracy of the position information item is less than the accuracy threshold when the estimation accuracy of the orientation is less than the estimated orientation threshold. In this case, the controller 81 does not necessarily need to determine whether the estimation accuracy of the map coordinate point is less than the estimated coordinate threshold.

As shown in Fig. 8, when the estimation accuracy of the position information item is greater than or equal to the accuracy threshold, the controller 81 determines in step S34 that the map data set M1 is non-defective. When the estimation accuracy of the position information item is less than the accuracy threshold, the controller 81 determines in step S35 that the map data set M1 is defective, and ends the determination process.

After the quality determination of the map data set M1, the controller 81 ends the determination process. The controller 81 thus includes the determining unit 85. Then, the determining unit 85 acquires the map-image data point from the map generating unit 84 as the pre-determination map-image data point IMH. Further, the determining unit 85 estimates the position of the autonomous vehicle 10 using the map data set M1 acquired from the map generating unit 84. Specifically, the determining unit 85 estimates the position of the autonomous vehicle 10 from the relative positional relationship between the map data set M1 acquired from the map generating unit 84 and the image data points captured by the camera 41. Then, the determining unit 85 determines the quality of the map data set M1 using a result of quality determination for the pre-determination map-image data point IMH and a result of quality determination based on the estimation accuracy at the time of the own position estimation.

### Operation of Embodiment

Operation of the present embodiment will now be described.

The controller 81 repeats the map generating process to generate the map data set M1. The controller 81 also performs the determination process to determine the quality of the map data set M1 generated by the map generating process. The controller 81 determines the quality of the map data set M1 using the image data points used to generate the map data set M1 and the map data set M1 generated by the map generating unit 84.

The present embodiment has the following advantages.
(1) The controller 81 performs the determination process to determine the quality of the map data set M1 generated by the map generating process. The controller 81 determines the quality of the map data set M1 using the image data points IM1 used to generate the map data set M1 and the map data set M1 generated by the map generating unit 84. Therefore, the autonomous vehicle 10 is moved along the route from the start of the generation of the map data set M1 until the autonomous vehicle 10 becomes operable only for the purpose of acquiring the image data points IM1 for generating the map data set M1. That is, in order to make the autonomous vehicle 10 operable, it is not necessary to move the autonomous vehicle 10 along the route twice for acquiring the image data point IM1 for generating the map data set M1 and for estimating the vehicle's own position. This shortens the time required from the start of the generation of the map data set M1 to the start of the operation of the autonomous vehicle 10.
(2) In the determination process, the controller 81 determines the quality of the map data set M1 by using the four thresholds. When conforming to all of the determinations using the four thresholds, the map data set M1 is determined to be non-defective. This improves the accuracy of the map data set M1. Therefore, it is possible to improve the estimation accuracy when the own position estimation is performed using the map data set M1 generated by the map generating process.
(3) The controller 81 determines the quality of the map data set M1 using the image data points IM1 acquired for generating the map data set M1. In other words, the generation and the quality determination of the map data set M1 are performed by simply moving the autonomous vehicle 10 to obtain the image data points IM1.

The above-described embodiment may be modified as follows. The above-described embodiment and the following modifications can be combined as long as the combined modifications remain technically consistent with each other.

The controller 81 stores a travel route data set in the storage unit 83. The travel route data set is a data set in which position information items are associated in advance with image data points obtained by capturing image data points of the road surface Sr of the route in advance with a camera. The controller 81 acquires the comparison image data point IMS from the travel route data set. The controller 81 performs the quality determination of the map data set M1 using the following items: a result of quality determination for comparison between the acquired comparison image data point IMS and image data points; and a result of quality determination based on the error between the intended route and the estimated position of the autonomous vehicle 10 derived from the relative positional relationship between the map data set M1 acquired from the map generating unit 84 and the travel route data set.

This configuration eliminates the need for a process of capturing images of the road surface Sr while moving the autonomous vehicle 10 along the route for the purpose of generating image data points of the road surface Sr on the route. This reduces the processes performed by the map generating unit 84.

In this case, in the determination process, the controller 81 determines whether the number of matches between the pre-determination map-image data point IMH and the comparison image data point IMS acquired from the travel route data set is greater than or equal to the matching threshold. Further, the controller 81 determines whether the reliability of the position information item associated with the pre-determination map-image data point IMH is less than the threshold. In addition, the controller 81 determines whether the area of the overlapping range A3 between the pre-determination map-image data point IMH and another consecutive map-image data point is greater than or equal to the area threshold. The controller 81 uses the pre-determination map-image data point IMH as the map data set M1 to determine whether the error between the route and the vehicle's own position estimated based on the relative positional relationship with the travel route data set is less than or equal to the threshold. Therefore, the controller 81 determines the quality of the pre-determination map-image data point IMH using the four thresholds. When the pre-determination map-image data point IMH conforms to all of the determinations using the four thresholds, the controller 81 determines that the pre-determination map-image data point IMH is non-defective.

In the determination process, the order of step S31 and the processes from step S32 to step S33 may be rearranged.

The map-image data point does not necessarily need to be a data point acquired by clipping part of an image data point. In the embodiment, the map-image data points may be circular image data points.

If the position information item is associated with the coordinate point representing the optical axis position of the camera 41 in the image coordinate system, the position information item does not necessarily need to be included in the map-image data point. That is, the coordinate point representing the optical axis position of the camera 41 in the image coordinate system may be outside the range of the map-image data point.

The map data set M1 may be stored in the storage unit 83.

The coordinate system representing the pixel positions of the map-image data points may be different from the coordinate system representing the pixel positions of the image data points.

The camera 41 may be provided at a position different from the bottom of the vehicle body 11 if the camera 41 is arranged to face the vertical direction.

The map generating unit 84, the determining unit 85, and the own position estimating unit 86 may be separate devices.

In the process of step S33 of the determination process, if the estimation accuracy is greater than or equal to the accuracy threshold, at least one of the determination of step S24, the determination of step S25, and the determination of step S31 may be omitted.

The determination process by the determining unit 85 may be performed after completion of the map generating process.

## Claims

1. An autonomous vehicle that travels while estimating a vehicle's own position, comprising:
a vehicle body;
a camera that is mounted on the vehicle body and captures images of a road surface of a route;
a map generating unit that generates a map data set by arranging map-image data points, in which position information items are associated with image data points captured by the camera, according to the position information items; and
a determining unit that
acquires, from the map generating unit, one of the map-image data points as a pre-determination map-image data point, and
performs quality determination for the map data set using a result of quality determination for the acquired pre-determination map-image data point and a result of quality determination based on accuracy of estimation of the vehicle's own position made by using the map data set acquired from the map generating unit.

2. The autonomous vehicle according to claim 1, wherein the determining unit
acquires, as a comparison image data point, an image data point that is different from the image data point associated with the position information item in the pre-determination map-image data point and has been captured at a position close to a position at which the image data point associated with the position information item has been captured, and
performs quality determination for the map data set by using
a result of quality determination for the pre-determination map-image data point acquired when the acquired comparison image data point and the pre-determination map-image data point are compared with each other, and
a result of quality determination based on accuracy of estimation of the vehicle's own position made by using a relative positional relationship between the map data set acquired from the map generating unit and the image data points.

3. The autonomous vehicle according to claim 2, wherein the determining unit determines that the map data set is non-defective when
a number of matches between the pre-determination map-image data point and the comparison image data point is greater than or equal to a matching threshold,
a reliability of the position information item associated with the pre-determination map-image data point is greater than or equal to a threshold,
for the multiple map-image data points forming the map data set, an area of an overlapping range between consecutive ones of the map-image data points is greater than or equal to an area threshold, and
accuracy of estimation of the vehicle's own position made based on a relative positional relationship between the map data set and the image data point by using the pre-determination map-image data point as the map data set is greater than or equal to an accuracy threshold.

4. The autonomous vehicle according to claim 1, comprising a storage unit that stores a travel route data set in which position information items are associated in advance with image data points of the road surface of the route captured in advance by a camera, wherein the determining unit
acquires a comparison image data point from the travel route data set, and
performs quality determination for the map data set by using
a result of quality determination when the acquired comparison image data point and the pre-determination map-image data point are compared with each other, and
a quality determination result based on an error between the route and a result of estimation of the vehicle's own position made by using a relative positional relationship between the map data set acquired from the map generating unit and the travel route data set.

5. The autonomous vehicle according to claim 4, wherein the determining unit determines that the pre-determination map-image data point is non-defective when
a number of matches between the pre-determination map-image data point and the travel route data set is greater than or equal to a matching threshold,
a reliability of the position information item associated with the pre-determination map-image data point is greater than or equal to a threshold,
an area of an overlapping range between the pre-determination map-image data point and another consecutive map-image data point is greater than or equal to an area threshold, and
an error between the route and the vehicle's own position is less than or equal to a threshold, the vehicle's own position being estimated from a relative positional relationship between the map data set and the travel route data set by using the pre-determination map-image data point as the map data set.
